# EUROPEAN PATENT SPECIFICATION

(11) **EP 3 094 170 B1**
(45) Date of publication and mention of the grant of the patent: **12.07.2017**
(21) Application number: 15700168.6
(22) Date of filing: 12.01.2015
(51) Int. Cl.: A01K 1/015, A01K 1/035, A01K 15/02

(54) **A PET ACTIVITY TOY**
HAUSTIERBESCHÄFTIGUNGSSPIELZEUG
JOUET D'ACTIVITÉS POUR ANIMAL DOMESTIQUE

(30) Priority: 16.01.2014 DK 201470018
(43) Date of publication of application: 23.11.2016
(73) Proprietor: Vesterholt, Marianne Haller, 9970 Strandby (DK)
(72) Inventor: Vesterholt, Marianne Haller, 9970 Strandby (DK)
(74) Representative: Plougmann Vingtoft a/s
(86) International application number: PCT/DK2015/050004
(87) International publication number: WO 2015/106763

(56) References cited:
- WO-A1-01/67850
- DE-U1-202012 008 129
- US-A1- 2001 047 770
- US-A1- 2007 028 852
- US-A1- 2011 079 183
- US-A1- 2014 338 127

## Description

### TECHNICAL FIELD

This invention relates to pet activity toys comprising a flexible sheet-like mat with an upper surface carrying a pouch which can be manipulated by a pet, preferably to allow the pet to retrieve objects hidden therein.

### BACKGROUND

In today's society the mental health of pets has been more and more put in focus. One aspect that has been under development is the need of stimulating pets, especially pets living in urban environments presenting a limited amount of mentally stimulating objects. It has been identified that many pets, especially cats and dogs, can acquire positive mental stimulation in conjunction with toys. However, the existing pet toys of today are limited and often also either rather expensive and/or difficult to combine/use in modern homes.

US patent 7806086 discloses a pet activity toy consisting of three flexible, sheet formed layers fixedly attached to each other one on top of the other by two hems, each lower layer having a larger size than a layer positioned on top of the lower layer so that a top layer is smallest and a bottom layer is largest, the hems extending continuously a longer distance than a width of the top layer, wherein each of the layers is in the shape of a square, each layer is positioned so that the corners lie substantially along a straight line coinciding with the corners of every other layer, and two hems are positioned substantially along a straight line perpendicularly to each other and crossing each other at a centre of the layers, and retaining compartments in the form of pockets between each adjacent layer of flexible material and bordered by the hems, the retaining compartments being defined in part by tabs and being arranged to enable hiding and retrieving of objects therein.

GB patent 2448772 discloses a canine activity mat with various sound noises embedded and with pouches in which a person can place various dog treats.

One common feature of the above two pet activity devices is that the pouches or pockets are configured to be permanently attached to the substrate/mat.

A pet activity toy according to the preamble of claim 1 is known from United States patent application US2011/0079183 A1.

### SUMMARY OF THE INVENTION

The invention presents a new kind of versatile pet activity toy that is highly stimulating to a pet, by the pet learning over time that applying an excessive force on a pouch on a mat will make it more difficult or impossible for the pet to manipulate the pouch, for it to access or open a compartment within the pouch, such as in order for the pet to gain access to a hidden treat/object in the pouch. This results from the pouch coming loose from the mat when an excessive force is applied on the pouch by the pet whereby the pet will no longer be able to stand on the mat to control the position of the pouch relative to the surroundings during the manipulation by its snout or paws. Yet, the pouch may be reconnected to the mat for another learning experience.

This is achieved by the pet activity toy of the invention as defined in claim 1. By using connecting elements configured to be disengageable and reengageable - such as by snap action in contrast to a stitched attachment - there is a reduced risk that the pet holding the pouch in its mouth will damage the activity toy permanently when the pet gets overly excited since the connection between the pouch and the mat simply yields at the release force determined by the design and/or choice of the cooperating connector elements.

The release force required for the connection between the pouch and mat to yield may by way of example be selected to be in the order of 5-25 N, and may be selected in accordance with the type of pet, i.e. small dog corresponding to a small release force, or vice versa. Where the pouch is connected to the mat at several connecting point, i.e. through two or more first connector elements cooperating with a corresponding number of second connector elements, the force required to release each individual first and second connector element connection should be designed in accordance with any required overall release force. The invention allows a person to place the pouch in different positions and/or configurations across the mat, manipulation of the pouch requiring the pet to stand on the mat in some cases and partially on the pouch in other cases, for it to open the compartment.

Preferably, the component, oriented perpendicular to the upper surface of the mat, of a release force of a holding structure to be released by the pet during manipulation of the pouch for access the compartment is in the order of 1-80 % of the release force required to remove or peel off the pouch from the mat.

Thanks to the use of a flexible mat the pet activity toy according to the invention can easily be stuffed away in different kind of spaces. Further the design provides for a toy that may be produced very cost-efficiently. Moreover it is also easily transported.

Further advantages according to the invention will be apparent from the description below.

### BRIEF DESCRIPTION OF THE DRAWINGS

In the following the invention will be described in more detail with reference to the drawings, wherein:
FIG. 1 shows a perspective view of an activity toy according to a first embodiment of the invention,
FIGS. 2 and 3 show an embodiment of a pouch in a folded and fully unfolded configuration, respectively,
FIGS. 4 and 5 show the pouch of fig. 2 in a partially and fully unfolded configuration, respectively, during manipulation thereof by a dog.

### DETAILED DESCRIPTION

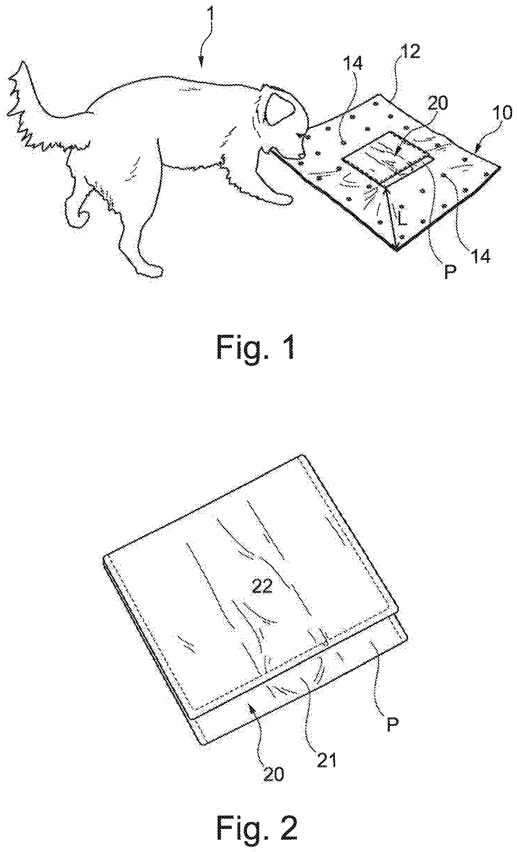

In FIG. 1 there is shown a pet, exemplified by dog 1, standing next to an embodiment of the pet activity toy of the invention, which comprises a pouch 20 arranged on the upper surface of a mat 10 of a flexible sheet-like material, positioned on a floor. The mat 20 is preferably made from a kind of cloth or of layers of cloth and may be produced by combining different kinds of cloth or one sub-layer of cloth with a plastic sheet. Where several superposed layers are used the layers may by way of example be stitched together and a soft internal layer, such as a resilient foam layer, may be used, such as to create a suitable sleeping place for the pet 1.

Preferably, the mat 10 is square or rectangular, or even circular, with a minimum width or diameter in the order of 400-1200 mm. The pouch 20 is configured to be manipulated by the pet 1 to allow access to or open an interior compartment within the pouch 20, preferably while the pouch 20 remains connected to the mat 10.

In FIG. 1 the pouch 20, to be discussed further below, is connected to the mat 10 at a central location thereon, leaving free a peripheral mat surface area between the pouch 20 and the peripheral edge 12 of the mat 10 corresponding to a round-going strip having a width in the order of dimension L depicted in FIG. 1, such as 10-15 cm. A plurality of individual connector elements 14 of a first type are distributed evenly across the upper surface of the mat 10 and may each be a respective component, such as a press stud, of a snap fastener acting together with a number of corresponding connector elements of a second type arranged on the bottom face (not visible) of the pouch 20, for holding the mat 10 and the pouch 20 together until a release force of a certain magnitude is applied to remove or peel off the pouch 20 from the mat 10 by separating the first connector elements 14 from the second connector elements. By using a releasable and reconnectable coupling a weak point is established whereby a pet 1 seeking to remove the pouch 20 from the mat 10 will not destroy the mat 10, as could be the case where the pouch 20 were stitched to the mat 10.

Where a snap fastener coupling between the pouch 20 and the mat 10 is used this may be of the type where one connector element includes a circular lip on a disc that fits into a groove on the top of the other connector element, holding the connector elements together until a certain amount of force is applied, and the connector elements may be attached to mat/pouch by riveting with a punch and die set specific to the type of rivet snaps used (striking the punch with a hammer to splay the tail), sewing, or plying with special snap pliers.

The individual first connector elements 14 may alternatively be the hooks of a Velcro type connection cooperating with a corresponding second element defined by the other part of the Velcro type connection located on the bottom face of the pouch 20, or vice versa.

It will be understood that the pouch 20 may be mounted by a person in different positions on the mat 10, depending on the known skills or level of development of the pet 1. In the position shown in fig. 1 there is place for the pet 1 to stand on the mat 10 on any side of the pouch 20 while manipulating the pouch 20 using its snout or paws, while alternatively placing the pouch 20 right at the edge 12 of the mat 10 may require the pet 1 to figure out the necessity of standing on a particular part P of the pouch 20 as such, to maintain the position of the pouch 20 relative to the floor while the pet 1 is manipulating the pouch 20 proper by its snout or paw to obtain access to a compartment inside the pouch 20. Thus, any given pouch 20 with which the pet 1 is already familiar may be placed in a new position that gives the pet 1 new challenges.

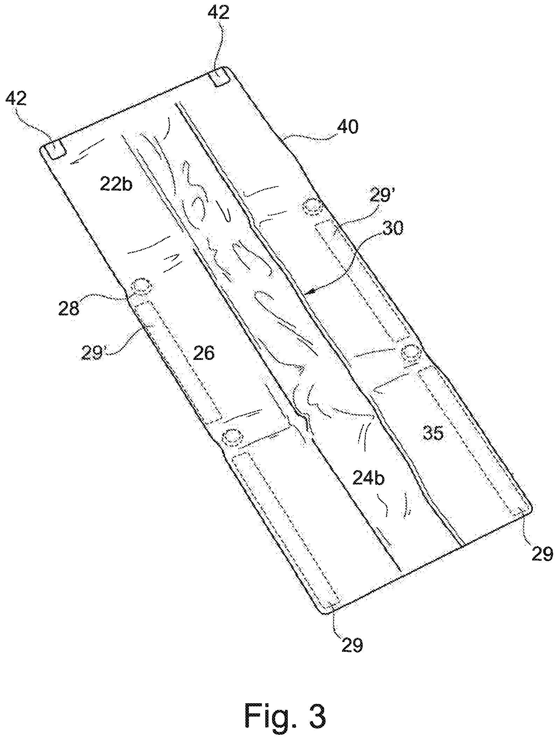

An exemplary pouch 20 is shown in FIGS. 2 and 3 in a folded or closed configuration and in an unfolded or open configuration, respectively. The pouch 20 may be made from a foldable sheet-like material, preferably of some kind of cloth, and may even be produced by combining different kind of cloths, or one sub-layer of cloth with some kind of plastic or polymer like sheets. Where several superposed sheets are used the sheets may by way of example be stitched together. A tufted material or a resilient foam layer may be included.

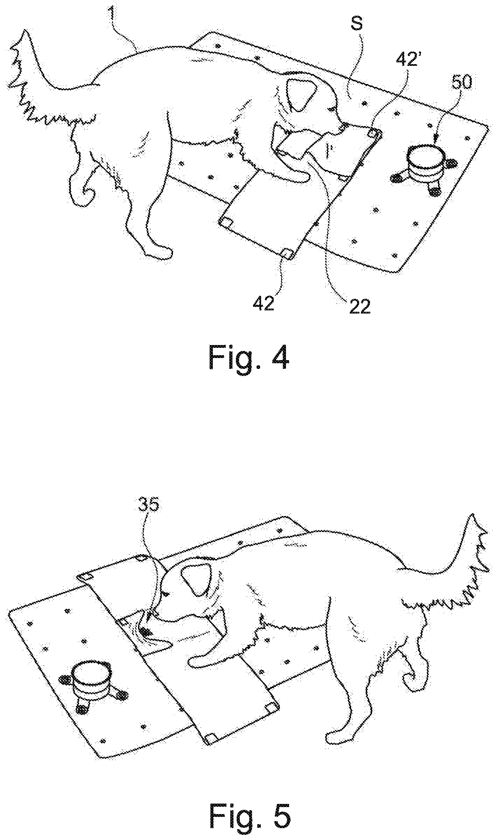

In the folded configuration shown in FIG. 2 the pouch has a tab 22 for making it easy for the pet 1 to open the pouch via an access 21 into which the pet 1 may introduce its snout or a paw. As best understood when viewing the pouch 20 in the unfolded configuration of FIG. 3 the folded pouch 20 comprises a bottom layer 26 connected along a transverse folding line with a back-folded middle layer having a face 24b oriented in the folded configuration towards the bottom layer 26, and a top layer 22 which defines the before-mentioned tab 22. The bottom layer 26 carries on the bottom surface (not visible) thereof the one or more second connector elements shown in broken line and identified by numeral 28, and includes on the opposite upper surface an engagement part 29' of a holding structure, which holding structure is for releasably holding the face 24b oriented against the bottom layer 26 and for releasably holding an inner face 22b of the top layer 22 oriented towards the bottom layer 26. The holding structure 29, 29', 42, 42' includes an engagement part 29 of the face 24b cooperating with the aforementioned engagement part 29' on the bottom layer 26, and also an engagement part 42 on the inner face 22b for holding the inner face 22b against the middle layer, by cooperation with a corresponding engagement part 42' (see FIG. 4) on the upper face of the middle layer. In this manner the pouch 20 is held in the folded configuration wherein manipulation by the pet 1 involves a release of the holding structure 29, 29', 42, 42' to access or open the compartment 35 shown in fig. 3 and 5, such as to retrieve an object hidden therein.

The holding structure 29, 29', 42, 42' may by way of example be of the Velcro type or of any snap-fastener type, with the release force of the holding structure required to access the compartment normally being less than the release force required to remove or peel off the pouch 20 from the mat 10, such as in the order of 1-80 % thereof; a Velcro type holding structure may be applied in the form of elongated cooperating strips 29, 29' of hooks and loops, respectively, applied on face 24b and the upper face of bottom layer 26 along each side edge 40, 42 of the flexible material defining the pouch 20, as shown in FIG. 3.

It will be understood that placing the connector elements 14, 28 according to a grid-like pattern as shown in the drawings allows the pouch 20 to be turned by 90°. Using a Velcro type connection allows the pouch 20 to be placed in any angular position.

Shown in FIGS. 4 and 5 is a dog 1 in the process of manipulating the pouch 20 using its snout and paws. Unfolding as shown follows after an initial step wherein the dog has lifted the tab 22 shown in FIG. 2, such as by widening access 21 by inserting its snout or a paw and releasing the holding structure by peeling the tab 22 away from the back-folded middle layer while standing either on portion P or on the mat 10 as such (depending on the proximity of the pouch 20 to the edge 12 of the mat 10). The pouch of FIG. 5 is slightly modified in that an additional well-defined compartment 35 containing a treat is provided; in FIGS. 2-4 the compartment 35 is defined in the folded configuration, between the layers 22, 26.

It will be understood that a person may choose to simultaneously have several pouches of an identical or similar type on the mat 10; the pouches may instead of being folded be in a somewhat rolled-up configuration which could be achieved by applying the hooks/loops of a Velcro type holding structure on opposite surfaces of a material portion as shown in FIG. 3.

Also, the connector elements 14 of the mat 10 may be used for applying other types of toys to the mat 10, as exemplified by item 50 shown in FIGS. 4 and 5, which item may by way of example by a lidded container.

## Claims

1. A pet activity toy comprising:
- a flexible sheet-like mat (10) with an upper surface (S) having one or more first connector elements (14) on said upper surface (S), and
- one or more pouches (20), each presenting at least one compartment (35),
- each of said one or more pouches (20) having one or more second connector elements (28) configured for being releasably connectable and reconnectable with said first connector elements (14), for releasably connecting and reconnecting said one or more pouches (20) to said upper surface (S) of said mat (10),
- said one or more pouches (20) being configured to be manipulatable to allow access to or open said compartment (35) while said pouch (20) remains connected to said mat (10), **characterized in that** a plurality of first connector elements (14) are distributed evenly across said upper surface (S), for releasably connecting and reconnecting said one or more pouches (20) to said upper surface (S) of said mat (10) in a plurality of different positions relative to said mat (10).

2. The pet activity toy of claim 1, said one or more pouches (20) including an access (21) configured to be openable or to be widened, such as by a pet (1) introducing its snout and/or paw into said access (21), to allow access to or open said compartment (35) through said manipulation.

3. The pet activity toy of claim 1 or 2, said first connector elements (14) and second connector elements (28) being respective components of a Velcro type connection, holding said mat (10) and said one or more pouches (20) together until a release force of a certain magnitude is applied.

4. The pet activity toy according to claim 1 or 2 said first connector elements (14) and second connector elements (28) being respective components of a snap fastener, such as by one of said component being a press stud, holding said mat (10) and said one or more pouches (20) together until a release force of a certain magnitude is applied.

5. The pet activity toy according to any of the previous claims, wherein said one or more pouches (20) comprise at least a bottom layer (26) and a top layer (22), said bottom layer (26) carrying on a bottom surface thereof said one or more second connector elements (28), and including a holding structure (42, 42') for releasably holding an inner face (22b) of said top layer (22) oriented towards said bottom layer (26), wherein said manipulation involves a release of said holding structure (42, 42') to allow a pet (1) to access or open said compartment (35), such as to retrieve an object hidden in said compartment (35).

6. The pet activity toy of any of the previous claims, said one or more pouches (20) being configured to be unfoldable and refoldable while said one or more pouches (20) remains connected to said mat (10), wherein said manipulation involves an unfolding of said one or more pouches (20) to access or open said compartment (35), such as to retrieve an object hidden in said compartment (35).

7. The pet activity toy according to the previous claim, said one or more pouches (20) comprising in a folded configuration at least a bottom layer (26) connected along a fold line with a middle layer having a face (24b) oriented towards said bottom layer (26), and a top layer (22), said bottom layer (26) carrying on a bottom surface thereof said one or more second connector elements (28), and including a holding structure (29, 29', 42, 42') for releasably holding said face (24b) oriented against said bottom layer (26) and for releasably holding an inner face (22b) of said top layer (22) oriented towards said bottom layer (26), wherein said manipulation involves a release of said holding structure (42, 42') to access or open said compartment (35), such as to retrieve an object hidden in said compartment (35).

8. The pet activity toy according to any of the previous claims, including a holding structure (29, 29', 42, 42'), such as of the Velcro type, for restricting said access, said manipulation being by release of said holding structure, said holding structure (29, 29', 42, 42') preferably extending along an edge (42) of said one or more pouches (20) and being configured to partially define said compartment (35).

9. The pet activity toy according to any of the previous claims, wherein the release force required for the connection between said one or more pouches (20) and said mat (10) to yield is in the range of 5-25 N.

## Patentansprüche

1. Haustier-Aktivierungsspielzeug, umfassend:
- eine biegsame, tuchartige Matte (10) mit einer oberen Fläche (S) mit einem oder mehreren ersten Verbindungselementen (14) auf der oberen Fläche (S) und
- einen oder mehrere Beutel (20), die jeweils mindestens eine Kammer (35) enthalten,
- wobei jeder des einen oder der mehreren Beutel (20) ein oder mehrere zweite Verbindungselemente (28) aufweist, die dazu ausgelegt sind, lösbar mit den ersten Verbindungselementen (14) verbunden und erneut verbunden zu werden, um den einen oder die mehreren Beutel (20) mit der oberen Fläche (S) der Matte (10) lösbar zu verbinden und erneut zu verbinden,
- wobei der eine oder die mehreren Beutel (20) dazu ausgelegt sind, manipulierbar zu sein, um den Zugang zu oder das Öffnen der Kammer (35) zu ermöglichen, während der Beutel (20) mit der Matte (10) verbunden bleibt,
- **dadurch gekennzeichnet, dass** eine Mehrzahl erster Verbindungselemente (14) gleichmäßig über der oberen Fläche (S) verteilt ist, um den Beutel (20) mit der oberen Fläche (S) der Matte (10) in einer Mehrzahl unterschiedlicher Positionen in Bezug zur Matte (10) lösbar zu verbinden und erneut zu verbinden.

2. Haustier-Aktivierungsspielzeug nach Anspruch 1, wobei der eine oder die mehreren Beutel (20) einen Zugang (21) enthalten, der dazu ausgelegt ist, geöffnet oder erweitert werden zu können, beispielsweise von einem Haustier (1), das seine Schnauze und/oder Pfote in den Zugang (21) einführt, um den Zugang zu oder das Öffnen der Kammer (35) durch diese Manipulation zu ermöglichen.

3. Haustier-Aktivierungsspielzeug nach Anspruch 1 oder 2, wobei die ersten Verbindungselemente (14) und die zweiten Verbindungselemente (28) jeweils Komponenten vom Typ Klettverschluss sind, die die Matte (10) und den einen oder die mehreren Beutel (20) zusammenhalten, bis eine Freigabekraft einer bestimmten Größe angelegt wird.

4. Haustier-Aktivierungsspielzeug nach Anspruch 1 oder 2, wobei die ersten Verbindungselemente (14) und die zweiten Verbindungselemente (28) jeweils Komponenten vom Typ Druckknopf sind, wie beispielsweise eine Komponente vom Typ Druckknopfunterteil ist, die die Matte (10) und den einen oder die mehreren Beutel (20) zusammenhalten, bis eine Freigabekraft einer bestimmten Größe angelegt wird.

5. Haustier-Aktivierungsspielzeug nach einem der vorhergehenden Ansprüche, wobei der eine oder die mehreren Beutel (20) mindestens eine untere Schicht (26) und eine obere Schicht (22) umfassen, wobei die untere Schicht (26) auf einer unteren Fläche davon das eine oder die mehreren zweiten Verbindungselemente (28) trägt und eine Haltekonstruktion (42, 42') zum lösbaren Halten einer zur unteren Schicht (26) gewandten Innenfläche (22b) der oberen Schicht (22) enthält, wobei die Manipulation eine Freigabe der Haltekonstruktion (42, 42') umfasst, um einem Haustier (1) den Zugang zu der oder das Öffnen der Kammer (35) zu ermöglichen, um einen in der Kammer (35) versteckten Gegenstand zu finden.

6. Haustier-Aktivierungsspielzeug nach einem der vorhergehenden Ansprüche, wobei der eine oder die mehreren Beutel (20) zum Entfalten und erneuten Falten ausgelegt sind, während der eine oder die mehreren Beutel (20) mit der Matte (10) verbunden bleiben, wobei die Manipulation ein Entfalten des einen oder der mehreren Beutel (20) umfasst, um den Zugang zu der oder das Öffnen der Kammer (35) zu ermöglichen, um einen in der Kammer (35) versteckten Gegenstand zu finden.

7. Haustier-Aktivierungsspielzeug nach einem der vorhergehenden Ansprüche, wobei der eine oder die mehreren Beutel (20) in einer gefalteten Konfiguration mindestens eine untere Schicht (26), die entlang einer Faltlinie mit einer mittleren Schicht mit einer zur unteren Schicht (26) gewandten Fläche (24b) verbunden ist, und eine obere Schicht (22) umfasst, wobei die untere Schicht (26) auf einer unteren Fläche davon, die das eine oder die mehreren zweiten Verbindungselemente (28) trägt und eine Haltekonstruktion (29, 29', 42, 42') zum lösbaren Halten der zur unteren Schicht (26) gewandten Fläche (24b) und zum lösbaren Halten einer zur unteren Schicht (26) gewandten Innenfläche (22b) der oberen Schicht (22) enthält, wobei die Manipulation eine Freigabe der Haltekonstruktion (42, 42') umfasst, um den Zugang zu der oder das Öffnen der Kammer (35) zu ermöglichen, um einen in der Kammer (35) versteckten Gegenstand zu finden.

8. Haustier-Aktivierungsspielzeug nach einem der vorhergehenden Ansprüche, enthaltend eine Haltekonstruktion (29, 29', 42, 42'), wie vom Typ Klettverschluss, zum Einschränken des Zugangs, wobei die Manipulation durch Freigabe der Haltekonstruktion erreicht wird, wobei sich die Haltekonstruktion (29, 29', 42, 42') vorzugsweise entlang einer Kante (42) des einen oder der mehreren Beutel (20) erstreckt und dazu ausgelegt ist, die Kammer (35) teilweise festzulegen.

9. Haustier-Aktivierungsspielzeug nach einem der vorhergehenden Ansprüche, wobei die für die Lösung der Verbindung zwischen dem einen oder den mehreren Beuteln (20) und der Matte (10) erforderliche Freigabekraft im Bereich von 5-25 N liegt.

## Revendications

1. Jouet multi-activités pour animal domestique, comprenant :
- un tapis comme drap flexible (10) ayant une surface supérieure (S) comportant un ou plusieurs premiers éléments connecteur (14) sur ladite surface supérieure (S), et
- une ou plusieurs poches (20), chacune présentant au moins un compartiment (35),
- chacune desdites poches (20) comportant un ou plusieurs seconds éléments connecteur (28) conçus pour pouvoir être facilement attachés, détachés et attachés de nouveau auxdits premiers éléments connecteur (14), afin d'attacher, détacher et attacher de nouveau lesdites poches (20) à ladite surface supérieure (S) dudit tapis (10),
- lesdites poches (20) étant conçues pour pouvoir être manipulées pour permettre l'accès à ou ouvrir ledit compartiment (35) alors que ladite poche (20) reste attachée audit tapis (10),
- **caractérisé en ce que** plusieurs premiers éléments connecteur (14) sont répartis uniformément sur ladite surface supérieure (S), par exemple pour attacher, détacher et attacher de nouveau ladite poche (20) à ladite surface supérieure (S) dudit tapis (10) dans plusieurs positions différentes par rapport audit tapis (10).

2. Jouet multi-activités pour animal domestique selon la revendication 1, lesdites poches (20) comprenant un accès (21) conçu pour pouvoir être ouvert ou élargi, par exemple par un animal domestique (1) introduisant son museau et/ou sa patte dans ledit accès (21), pour permettre l'accès à ou l'ouverture dudit compartiment (35) au moyen de ladite manipulation.

3. Jouet multi-activités pour animal domestique selon la revendication 1 ou 2, lesdits premiers éléments connecteur (14) et seconds éléments connecteur (28) étant des composants respectifs de type Velcro, qui maintiennent ensemble ledit tapis (10) et lesdites poches (20) jusqu'à l'application d'une force de libération d'une certaine grandeur.

4. Jouet multi-activités pour animal domestique selon la revendication 1 ou 2, lesdits premiers éléments connecteur (14) et seconds éléments connecteur (28) étant des composants respectifs d'un bouton-pression, par exemple l'un desdits composants étant un bouton à pression, qui maintiennent ensemble ledit tapis (10) et lesdites poches (20) jusqu'à l'application d'une force de libération d'une certaine grandeur.

5. Jouet multi-activités pour animal domestique selon l'une quelconque des revendications précédentes, dans lequel lesdites poches (20) comprennent au moins une couche inférieure (26) et une couche supérieure (22), ladite couche inférieure (26) portant sur une surface inférieure lesdits seconds éléments connecteur (28) et comprenant une structure de retenue (42, 42') destinée à retenir de façon amovible une face intérieure (22b) de ladite couche supérieure (22) orientée en direction de ladite couche inférieure (26), dans lequel ladite manipulation implique une libération de ladite structure de retenue (42, 42') pour permettre à un animal domestique (1) d'accéder à ou d'ouvrir ledit compartiment (35), afin de récupérer un objet caché dans ledit compartiment (35).

6. Jouet multi-activités pour animal domestique selon l'une quelconque des revendications précédentes, lesdites poches (20) étant conçues pour pouvoir être pliées, dépliées et repliées alors que lesdites poches (20) restent attachées audit tapis (10), dans lequel ladite manipulation implique le dépliage desdites poches (20) pour accéder à ou ouvrir ledit compartiment (35) afin de récupérer un objet caché dans ledit compartiment (35).

7. Jouet multi-activités pour animal domestique selon la revendication précédente, lesdites poches (20) comprenant en une configuration pliée au moins une couche inférieure (26) attachée le long d'une ligne de pliage à une couche intermédiaire ayant une face (24b) orientée en direction de ladite couche inférieure (26) et une couche supérieure (22), ladite couche inférieure (26) portant sur une surface inférieure lesdits seconds éléments connecteur (28) et comprenant une structure de retenue (29, 29', 42, 42') destinée à retenir de façon amovible ladite face (24b) orientée contre ladite couche inférieure (26) et à retenir de façon amovible une face intérieure (22b) de ladite couche supérieure (22) orientée en direction de ladite couche inférieure (26), dans lequel ladite manipulation implique une libération de ladite structure de retenue (42, 42') pour accéder à ou ouvrir ledit compartiment (35) afin de récupérer un objet caché dans ledit compartiment (35).

8. Jouet multi-activités pour animal domestique selon l'une quelconque des revendications précédentes, comprenant une structure de retenue (29, 29', 42, 42'), par exemple de type Velcro, destinée à restreindre ledit accès, ladite manipulation consistant à détacher ladite structure de retenue, ladite structure de retenue (29, 29', 42, 42') s'étendant de préférence le long d'un bord (42) desdites poches (20) et étant conçue pour définir en partie ledit compartiment (35).

9. Jouet multi-activités pour animal domestique selon l'une quelconque des revendications précédentes, dans lequel la force de libération requise pour la fixation entre lesdites poches (20) et ledit tapis (10) est dans la plage de 5 à 25 N.
